(19) Europäisches Patentamt
European Patent Office
Office européen des brevets

(11) Publication number: 0 490 563 B1

# (12) EUROPEAN PATENT SPECIFICATION

(45) Date of publication of patent specification: 11.10.95

(51) Int. Cl.[6]: A01N 43/653, //(A01N43/653, 33:12)

(21) Application number: 91311266.0

(22) Date of filing: 04.12.91

The file contains technical information submitted after the application was filed and not included in this specification

## (54) Use of certain triazoles to protect materials from fungal attack, articles and compositions.

(30) Priority: 10.12.90 US 625278

(43) Date of publication of application: 17.06.92 Bulletin 92/25

(45) Publication of the grant of the patent: 11.10.95 Bulletin 95/41

(84) Designated Contracting States: AT BE CH DE DK ES FR GB GR IT LI LU NL SE

(56) References cited:
EP-A- 0 038 109
EP-A- 0 061 840
EP-A- 0 131 684
EP-A- 0 145 294
EP-A- 0 251 775
EP-A- 0 328 466
US-A- 4 366 165

(73) Proprietor: ROHM AND HAAS COMPANY
Independence Mall West
Philadelphia
Pennsylvania 19105 (US)

(72) Inventor: Leightley, Liam Edward
828 Surrey Drive
Gwynedd Valley, PA 19437 (US)
Inventor: Willingham, Gary Lewis
2444 Rosemore Avenue
Glenside, PA 19038 (US)
Inventor: Shaber, Steven Howard
44 Ash Stocker Avenue
Horsham, PA 19044 (US)

(74) Representative: Smith, Julian Philip Howard et al
Rohm and Haas (UK) Limited,
European Operations Patent Dept.,
Lennig House,
2 Masons Avenue
Croydon CR9 3NB (GB)

EP 0 490 563 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Van Dijck, et al., U.S. Patent 4,648,988, disclose wood preserving liquids using certain azoles as active fungicidal ingredient, especially azaconazole, etaconazole, and propiconazole. These compounds have weaknesses against certain fungi.

Other triazoles have also been disclosed for wood protection. See, e.g., Japanese 59104367 of June 16, 1984 to Takeda Chemical Ind. K.K.; Bass et al., U.S. Patent 4,767,777; and Parsons et al, U.S. Patent 4,772,613.

Other triazoles have been described as useful as agricultural fungicides but not for protection of materials such as wood, and the like, from fungal attack, for example in EP-A-328466, EP-A-061840, US 4366165, EP-A-251775 and EP-A-145294.

It is an object of the present invention to provide a method of protecting materials against fungal attack. Accordingly in one aspect of the invention comprises the use of the triazoles α-[2-(4-chlorophenyl)ethyl]-α-phenyl-1H-1,2,4-triazole-1- propanenitrile or α-n-butyl-α-4-chlorophenyl-1H-1,2,4-triazole-1- propanenitrile as antifungal agents for wood, fabric, leather, coatings or caulks.

In another aspect the invention provides a method of preventing or inhibiting the growth of fungi in such a locus, comprising incorporating into or onto the locus, in an amount effective to adversely affect said growth, a triazole as defined above or a triazole and quaternary ammonium compound.

Especially when wood is being protected from attack by fungi we prefer compositions comprising the triazole(s) and a quaternary ammonium compound, for example, dimethylbenzylalkylammonium chloride, and preferably in a weight ratio of about 10:1 to 1:10, more preferably 4:1 to 1:1.

The following examples are presented to illustrate a few embodiments of the invention. All parts and percentages are by weight unless otherwise indicated.

Compound I is α-[2-(4-chlorophenyl)ethyl]-α-phenyl-1H-1,2,4-triazole-1-propanenitrile

Compound II is α-n-butyl-α-4-chlorophenyl-1H-1,2,4-triazole-1-propanenitrile

### EXAMPLE 1

This example demonstrates efficacy of the triazoles against a number of fungi known to cause discoloration and disfigurement of paint films commonly referred to as mildew.

The test was run as follows. Potato dextrose agar (PDA) was dissolved in water (30 g PDA/1) and autoclaved at 15 psi for 15 minutes. PDA was purchased from Difco. Triazoles were dissolved in a small quantity of methanol and added to autoclaved, molten potato dextrose agar in a dilution series to give 0.01, 0.1, 1, 10 and 100 ug $ml^{-1}$. Final methanol content of the highest dose was included. The molten agar was pipetted into Petri plates (15 ml per plate) and allowed to set. Two 5 mm mycelial plugs were removed from mother cultures of each of the fungal species tested, and were placed near the edge of the test plates. When colonies were 10-40 mm in diameter, the radial mycelial growth was measured and $EC_{75}$ values were determined on log-probit paper.

Table 1 shows the $EC_{75}$ value (concentration giving 75% control of hyphal growth) for compound I.

TABLE 1

| ORGANISM | EC 75 (ppm)[a] |
|---|---|
| | I[b] |
| Alternaria solani | 5 |
| Aspergillus flavus | - |
| Cladosporium resinae | - |
| Fusarium moniliforme | - |
| Fusarium oxysporum | - |
| Penicillium digitatum | - |
| Penicillium italicum | - |
| Trichoderma viride | - |

a) $EC_{75}$ = concentration giving 75% control of hyphal growth.
b) Structure given overleaf.

Table 2 shows the $EC_{50}$ values (concentration giving 75% control of hyphal growth) for both triazoles.

TABLE 2

| ORGANISM | EC 50 (ppm)[a] | |
|---|---|---|
| | I | II |
| Aspergillus flavus | 3.5 | 1.2 |
| Aureobasidum pullulans | - | 0.5 |
| Cladosporium resinae | 0.025 | 1.7 |

Structures of Arylcyanolakyltriazoles Tested

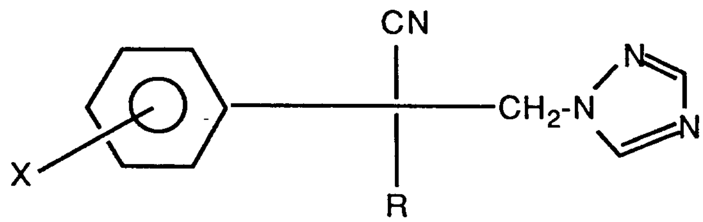

| Compound | X | R |
|---|---|---|
| I | H | $(CH_2)_2C_6H_4(4\text{-}Cl)$ |
| II | 4-Cl | $n\text{-}C_4H_9$ |

EXAMPLE 2

This example demonstrates that the biological activity of both triazoles is not affected at pH values from 3.5 to 11.2. Data are given in Table 3.

Testing was done as follows. Chilled yeast dextrose broth inoculated with Piricularia oryzae was amended with KOH or HCl so that pH was varied as noted in Table 1. The broth was placed in microtiter plates. Acetone solutions containing 10,000 ppm of the compounds were added to a microtiter plate containing 240 microliters per well of sterile deionized water and 8 2x serials dilutions were made. Compound was added from these master plate with a 96 well metal transfer device to the inoculated broth plates. After 3 days incubation the plates were visually assessed for percent mycelial inhibition.

TABLE 3

| Fungicidal Activity of Several Arylcyanoalkyltriazoles as a Function of PH | | | | | | | | | |
|---|---|---|---|---|---|---|---|---|---|
| Compound[a)] | $EC_{90}$[b] (ppm) for mycelial growth | | | | | | | | |
| | pH | | | | | | | | |
| | 3.5 | 4.8 | 5.4 | 6.3 | 7.2 | 7.7 | 8.7 | 9.8 | 11.2 |
| I | 0.5 | 0.1 | 0.1 | 0.1 | 0.1 | 0.1 | 0.1 | 0.1 | 0.1 |
| II | 5 | 4.5 | 4.5 | 4.5 | 4.5 | 4.5 | 5 | 4.5 | 4.5 |

a) Compound structures given on page 4.

b) $EC_{90}$ = Concentration giving 90% control of hyphal growth.

EXAMPLE 3

This example demonstrates the fungicidal activity of both triazoles in paint film against two major fungal species. Testing is described below.

Testing was done in a commercial acrylic-based latex paint with conventional pigments, dispersants, and the like. The formulation utilized was a typical paint blend and is given in Table 4. Texanol (R) is trimethyl-1,3-pentanediol monisobutyrate supplied by Eastman Chemical. "Latex" is a latex of a copolymer of butyl acrylate and methyl methacrylate.

To a sealable contained was charged 100 parts of the paint formulation and the desired triazole concentration. The sample was homogenized for 15 minutes each, then blended and remixed.

The triazoles were evaluated for their effectiveness as paint film mildewcides at 1.5 and 10 lbs/100 gallons in a laboratory popsickle stick test. Untreated controls were included in the test.

Duplicate popsickle sticks painted with the treated and untreated paint sample were inoculated with Aureobasidium pullulans and Aspergillus niger. The sticks were inoculated for 10 days at 30°C and 95% RH and samples were rated for fungal growth.

Data is given in Table 5.

TABLE 4

| Latex Paint Formulation | | |
|---|---|---|
| Material | lb/50 gal | g/l |
| Natrosol 250 MHR hydroxyethylcellulose | 1.5 | 3.6 |
| Ethylene glycol | 12.5 | 30 |
| | Premix | |
| Water | 56.0 | 134.4 |
| Tamol 960 (50%) poly(methacrylic acid) | 3.6 | 8.6 |
| Potassium tripolyphosphate | 0.75 | 1.8 |
| Triton CF-10 surfactant | 1.3 | 3.1 |
| Colloid 643 thickener | 0.5 | 1.2 |
| Propylene glycol | 17.0 | 40.8 |
| Ti-Pure R-902 titanium dioxide | 112.5 | 270 |
| Minex 4 filler pigment | 79.7 | 191.3 |
| Icecap K filler pigment | 25.0 | 60 |
| Attagel 50 clay | 2.5 | 6 |
| | Let Down | |
| Latex | 153.0 | 378.1 |
| Colloid 643 | 1.5 | 3.6 |
| Texanol coalescent | 4.7 | 11.3 |
| Ammonia (28%) | 1.6 | 2.8 |
| Natrosol 250 MHR (2.5) | 53.50 | 128.4 |
| Water | 54.46 | 130.8 |
| | 581.17 | 1394.9 |

TABLE 5

| Fungicidal Activity of Triazoles in a Paint Film Test | | | | | |
|---|---|---|---|---|---|
| Compound[a)] | Treatment Level lbs/100 gal | Fungal Growth[b)] | | | |
| | | A. niger | | A. pullulans | |
| | | R1 | R2 | R1 | R2 |
| I | 1<br>5<br>10 | 4+<br>4+<br>3+ | 4+<br>3+<br>3+ | 2+<br>T<br>T | 2+<br>T<br>T |
| II | 1<br>5<br>10 | 3+<br>2+<br>1+ | 2+<br>T<br>T | 3+<br>2+<br>2+ | 4+<br>2+<br>1+ |
| Untreated control | -- | 4+ | 4+ | 4+ | 4+ |

a) Compound structures given on page 4.
b) Rating Scale
0 = No fungal growth, complete inhibition of the test organism
T = Barest trace of growth
1+ = Very light growth
2+ = Light growth
3+ = Moderate growth
4+ = Heavy growth

EXAMPLE 4

This example demonstrates the efficacy of an arylcyanoalkyl triazole against fungi known to cause decay of wood.

The test was run as follows. Potato dextrose agar (PDA) was dissolved in water (39g PDA/1) and autoclaved at 15 psi for 15 min. PDA was purchased from Difco. The triazole was dissolved in a small quantity of dimethylsulfoxide (DMSO) and diluted to appropriate concentrations with the same solvent. Ten microliters of the appropriate solution was added to each of five wells of a Falcon 6 well tissue culture dish. To the sixth well was added ten microliters of DMSO as a control. Five ml of molten PDA was then added to each of the wells to give 0.01, 0.1, 10 and 100 $\mu l^{-1}$ of triazole. The plate was gently agitated to afford a uniform mixture. Upon cooling, the dishes were inoculated with a six mm agar plug from a freshly grown culture of the test organism. The assay plates were then incubated at room temperature and evaluated when the radial growth in the control well had reached approximately 30mm. The radial growth for the treated wells was measured and the growth inhibition and $EC_{50}$ values were calculated using non-linear regression analysis. Data are shown in Table 6 for triazoles I and II (Table). $EC_{50}$ values (concentration giving 50% control of hyphal growth) are reported.

TABLE 6

| Organism | $EC_{50}$ (ppm)[a] | |
|---|---|---|
| | Structure I[b] | Structure II |
| Gloeophyllum tradeum | 0.158 | 0.313 |
| Phialophora mutabilis | 0.612 | 1.447 |
| Poria placenta | 0.175 | 0.228 |
| Trametes Versicolor | 0.061 | 0.118 |

a) $EC_{50}$ = concentration giving 50% control of hyphal growth.
b) Structure is given on page 4.

EXAMPLE 5

This example demonstrates the synergistic fungicidal effect of a triazole of the invention and a quarternary ammonium compound when employed together.

A synergistic effect is defined as the response of two variables which is greater than the sum of both parts alone. Synergy was determined from combination studies with two compounds by the method of calculation described by F.C. Kull, P.C. Eisman, H.D. Sylwestrowicz and R.K. Mayer, *Applied Microbiology* 9,538 (1961):

$$\frac{Q_a}{Q_A} + \frac{Q_b}{Q_B} = \text{synergism index} \qquad \text{(SI)}$$

where:

$Q_A$ = quantity of compound A, acting alone, producing an end point (MIC)
$Q_a$ = quantity of compound A, in mixture, producing an end point (MIC)
$Q_B$ = quantity of compound B, acting alone, producing an end point (MIC)
$Q_b$ = quantity of compound B, in mixture, producing an end point (MIC)

The following SI values may be attained:

SI > 1 represents antagonistic effect,
SI = 1 represents additive effect,
SI < 1 represents synergy.

Triazole I and dimethylbenzylalkylammonium chloride were evaluated according to the procedure of Example 1 (except that the medium used was trypticase soy broth), separately and in combination, against a number of organisms. The results are shown in Table 7.

TABLE 7

| ORGANISM | END POINT (ppm) | | | RATIO | SI |
|---|---|---|---|---|---|
| | Triazole I (A) | Quat (B) | A + B | | |
| A. niger | 8 | 8 | 2+4 | 1:2 | 0.75 |
| | | | 2+2 | 1:1 | 0.50 |
| | | | 4+1 | 4:1 | 0.63 |
| R.Rubra | 16 | 2 | 2+1 | 2:1 | 0.63 |
| | | | 4+1 | 4:1 | 0.75 |
| Yeast | 8 | 4 | 2+2 | 1:1 | 0.75 |

The above results show that the combination of triazole I and dimethylbenzylalkylammonium chloride is synergistic, with ratios of A:B between 1:1 and 4:1 being clearly successful.

While the invention has been described with reference to specific examples and applications, other modifications and uses for the invention will be apparent to those skilled in the art.

## Claims

1. Use of the triazoles α-[2-4-chlorophenyl)ethyl]-α-(phenyl-1H-1,2,4-triazole-1- propanenitrile; α-n-butyl-α-4-chlorophenyl-1H-1,2,4-triazole-1-propanenitrile as antifungal agents for wood, fabric, leather, coatings, and caulks.

2. Use according to claim 1 wherein said triazoles are applied in combination with a quaternary ammonium compound.

3. Method of preventing or inhibiting the growth of fungi in wood, fabric, leather, coatings or caulks, comprising incorporating into or onto the locus, in an amount effective to adversely affect said growth, a triazole as defined in claim 1, optionally with a quaternary ammonium compound

4. Composition comprising a triazole as defined in claim 1 and a quaternary ammonium compound, preferably deimethylbenzylalkylammonium chloride.

5. Use, method or composition according to any one of claims 2 to 4 wherein the ratio or triazole to quaternary ammonium compound is from 10:1 to 1:10 by weight, preferably from 4:1 to 1:1 by weight.

## Patentansprüche

1. Verwendung der Triazole α-[2,4-Chlorphenyl)ethyl]-α-phenyl-1H-1,2,4-triazol-1-propannitril, α-n-Butyl-α-4-chlorphenyl-1H-1,2,4-triazol-1-propannitril als fungizide Mittel für Holz, Textilien, Leder, Beschichtungszusammensetzungen und Dichtungsmittel.

2. Verwendung nach Anspruch 1,
**dadurch gekennzeichnet**,
daß die Triazole in Kombination mit einer quaternären Ammoniumverbindung verwendet werden.

3. Verfahren zum Verhindern oder Hemmen des Wachstums von Pilzen in Holz, Textilien, Leder, Beschichtungszusammensetzungen oder Dichtungsmitteln durch Einbringen in oder auf den Ort einer wirksamen Menge, um das Wachstum gegenteilig zu beeinflussen, eines Triazols, wie in Anspruch 1 angegeben, gegebenenfalls zusammen mit einer quaternären Ammoniumverbindung.

4. Zusammensetzung, enthaltend ein Triazol, wie in Anspruch 1 angegeben, und eine quaternäre Ammoniumverbindung, vorzugsweise Dimethylbenzylalkylammoniumchlorid.

5. Verwendung, Verfahren oder Zusammensetzung nach einem der Ansprüche 2 bis 4,
**dadurch gekennzeichnet**,
daß das Gewichtsverhältnis von Triazol:quaternäre Ammoniumverbindung von 10:1 bis 1:10, vorzugsweise von 4:1 bis 1:1, beträgt.

## Revendications

1. Utilisation des triazoles α-[2-(4-chlorophényl)éthyl]-α-phényl-1H-1,2,4-triazole-1-propanenitrile, α-n-butyl-α-4-chlorophényl-1H-1,2,4-triazole-1-propanenitrile comme agents antifongiques pour le bois, le tissu, le cuir, les revêtements et les calfatages.

2. Utilisation selon la revendication 1, dans laquelle lesdits triazoles sont appliqués en combinaison avec un composé d'ammonium quaternaire.

3. Procédé pour empêcher ou inhiber la croissance de champignons dans le bois, le tissu, le cuir, les revêtements ou les calfatages, comprenant l'incorporation, dans ou sur le lieu, en une quantité efficace

pour affecter de façon préjudiciable ladite croissance, d'un triazole tel que défini dans la revendication 1, éventuellement avec un composé d'ammonium quaternaire.

**4.** Composition comprenant un triazole tel que défini dans la revendication 1 et un composé d'ammonium quaternaire, de préférence un chlorure de diméthylbenzylalkylammonium.

**5.** Utilisation, procédé ou composition selon l'une quelconque des revendications 2 à 4, dans lequel le rapport du triazole au composé d'ammonium quaternaire est de 10:1 à 1:10, en poids, de préférence de 4:1 à 1:1, en poids.